# EUROPÄISCHE PATENTSCHRIFT

(11) **EP 1 133 438 B1**
(45) Veröffentlichungstag und Bekanntmachung des Hinweises auf die Patenterteilung: **02.06.2004**
(21) Anmeldenummer: 99972604.5
(22) Anmeldetag: 26.01.1999
(51) Int. Cl.: B65G 23/06, B65G 15/46

(54) **GURTBANDFÖRDERER**
BELT CONVEYOR
TRANSPORTEUR A COURROIE

(30) Priorität: 25.11.1998 DE 19854327
(43) Veröffentlichungstag der Anmeldung: 19.09.2001
(73) Patentinhaber: Edelmann, Klaus, 67547 Worms (DE)
(72) Erfinder: Edelmann, Klaus, 67547 Worms (DE)
(74) Vertreter: Zellentin, Wiger, Dipl.-Ing.
(86) Internationale Anmeldenummer: PCT/DE1999/000183
(87) Internationale Veröffentlichungsnummer: WO 2000/030959

(56) Entgegenhaltungen:
- EP-A- 0 138 745
- EP-A- 0 349 830
- EP-A- 0 518 748
- DE-A- 2 343 249
- DE-A- 3 744 278
- GB-A- 2 053 830

## Beschreibung

Die vorliegende Erfindung betrifft einen Gurtbandförderer mit einem umlaufenden Fördergurt, mit Tragrollen, welche zwischen dem Obertrum und dem Untertrum des Fördergurtes angeordnet sind, mit einer Antriebseinrichtung und einer Kraftübertragungseinrichtung zur Bewegung des Fördergurtes.

Aus der Praxis ist es bekannt, die Kraftübertragung von der Antriebseinrichtung auf den Fördergurt eines Gurtbandförderers über Reibschluß zu realisieren. Hierzu kann bspw. bereits die Friktion zwischen einer angetriebenen Tragrolle und dem Fördergurt ausreichen. Die übrigen Tragrollen sind beweglich gelagert und rotieren mit.

Aus der DE 42 44 170 C2 ist ein Gurtbandförderer mit einem Endlosförderband bekannt, wobei der Fördergurt mittels einer in Form eines Reibrades vorliegenden Kraftübertragungseinrichtung angetrieben wird. Unterhalb des Untertrums des Fördergurtes erstreckt sich eine Antriebswelle. Am Gurtkurveninnenradius ist ein Motor als Antriebseinrichtung mit der Antriebswelle verbunden, im Bereich des Außenradius sitzt ein Reibrad auf der Antriebswelle und kontaktiert die äußere Oberfläche des Fördergurtes. Dabei wirkt das Reibrad mit einer als Gegendruckrolle fungierenden Tragrolle zusammen. Die Antriebswelle ist sowohl im Bereich des Außenradius als auch im Bereich des Innenradius der Gurtkurve winkelbeweglich gelagert. Die winkelbewegliche Lagerung der Antriebswelle ermöglicht eine Anpassung der Anpressung des Reibrades an den Fördergurt proportional zur tatsächlichen Last. Auf diese Weise wird der Verschleiß gemindert, wenn der Fördergurt im Teillastbetrieb nur mit der dazu erforderlichen Anpreßkraft beaufschlagt wird.

Der aus der DE 42 44 170 C2 bekannte Gurtförderer mindert zwar den Verschleiß des Fördergurtes, kann ihn jedoch nicht weitgehend ausschließen. Im Hinblick auf die Förderung von Lebensmitteln oder anderen reinzuhaltenden Gütern kommt neben der mechanischen Beschädigung des Fördergurtes noch der Aspekt der Hygiene bzw. Reinhaltung hinzu. Die abgeriebenen Oberflächenpartikel des Fördergurtes könnten die Qualität des zu fördernden Gutes erheblich beeinträchtigen. Außerdem erfordert der bekannte Gurtförderer einen recht hohen Bauaufwand, was die bewegliche Lagerung der separaten Antriebswelle betrifft.

Aus der EP 0 636 559 A1 ist ein Kurvenförderer bekannt, bei welchem am Untertrum des Fördergurtes außen randseitig ein Zahnriemen angeordnet ist. Dieser Zahnriemen steht mit dem Zahnkranz einer Umlenkwalze in Eingriff. Der Antrieb erfolgt über einen zweiten Zahnriemen mit zusätzlichen Zahnkränzen, die mit einem Motor verbunden sind.

Die radial auftretende Zugkraft wird von einer gefederten Umlenkrolle aufgenommen, die gegen den Rand des Zahnriemens anliegt.

Nachteilig daran ist zum einen der bauliche Aufwand des Antriebs mit dem zusätzlichen Zahnradpaar und dem über diese laufenden Sekundärzahnriemen sowie der besonderen Gestaltung des mit dem Untertrum verbundenen Zahnriemens, der sehr dick ausgeführt sein muß, damit die Umlenkrolle an ihm, d.h. seiner Innenkante anliegen kann.

Da femer der Zahnriemen selbst die von der Umlenkrolle ausgehende Schubkraft aufnehmen muß, neigt dieser zum Abheben und unterliegt besonderem Verschleiß, was letztlich die Fördergeschwindigkeit limitiert.

Die EP 0 349 830 A1 letztlich zeigt eine Zugentlastung für die vorliegenden Zwecke, bestehend aus randseitig am Fördergurt angeordneten Wülsten, gegen die obere und untere Führungsrollen anliegen. Der Antrieb erfolgt durch Reibschluß, was sowohl hohen Verscheiß als auch eine relativ geringe Fördergeschwindigkeit mit sich bringt.

Die vorliegende Erfindung hat sich daher die Aufgabe gestellt, einen Kurvengurtförderer zu schaffen, welcher einfach aufgebaut ist und zum anderen eine hohe Fördergeschwindigkeit bei geringem Verschleiß ermöglicht.

Die voranstehende Aufgabe wird durch die Merkmale des Patentanspruches 1 gelöst. Vorzugsweise Ausgestaltungen finden sich in den Unteransprüchen.

Erfindungsgemäß ist erkannt worden, daß die Oberfläche des Fördergurtes infolge der Einwirkungen der Kraftübertragungseinrichtung nicht beeinträchtigt wird, wenn ein separates Elementenpaar vorgesehen ist, durch das Kraftübertragung realisiert wird. Weiter ist erkannt worden, daß die Anwendung eines für sich bekannten formschlüssig miteinander arbeitenden Elementenpaares zum Umformen von Bewegungen die bei reibschlüssiger Bewegungsumformung bekannten Nachteile, insbesondere Verschleiß und Abrieb, weitgehend beseitigt.

Im Hinblick auf einen besonders geringen Bauaufwand ist vorgesehen, daß der Zahnkranz einer Tragrolle zugeordnet ist und diese dadurch gleichzeitig die Rolle einer Kraftübertragungseinrichtung übernimmt. Über einen von der Tragrolle abgehenden Zapfen erfolgt der Antrieb mittels eines Motors. Der Zahnkranz könnte auf die Tragrolle aufgesteckt und lösbar - bspw. über eine Welle-Nabe-Verbindung oder eine Paßfeder - fest mit dieser verbunden sein. Bei einem aufgesteckten Zahnkranz ist von Vorteil, daß auf bereits vorhandene Tragrollen zurückgegriffen werden kann. Besonders vorteilhaft ist es, jeder Tragrolle zumindest einen Zahnkranz zuzuordnen. Über den gesamten Lauf des Fördergurtes würden dann der Zahnriemen und die Zahnkränze ineinandergreifen und den Fördergurt formstabil bewegen.

In Entsprechung zu dem bzw. den zwischen dem Ober- und Untertrum angeordneten Zahnkranz bzw. Zahnkränzen der vorgenannten bevorzugten Ausgestaltung ist der Zahnriemen an der Unterseite des Fördergurtes angeordnet und erstreckt sich in dessen Laufrichtung. Die Anordnung des Zahnriemens an der Unterseite des Fördergurtes stellt einmal mehr sicher, daß an der Oberseite des Fördergurtes, das ggf. mit reinzuhaltenden Gütern beschickt wird, keine Kraftübertragung, keine mechanische Beschädigung und keine Erzeugung von Abriebpartikeln oder sonstigen Verunreinigungen erfolgen.

Eine direkte Kraftübertragung auf kurzem Wege wird erreicht, indem von dem mit dem Zahnkranz versehenen Ende der Tragrolle ein Zapfen zum Anschluß der Antriebseinrichtung abragt.

Der Zahnriemen erstreckt im Bereich des Seitenrandes des Fördergurtes. Hierdurch wird einerseits eine einfache Konfektionierung des Fördergurtes mit dem Zahnriemen durch den direkten Bezug zum Randbereich ermöglicht, andererseits spielen auch hier die Zugänglichkeit für Wartungszwecke und selbstverständlich die Abstimmung des Zahnriemens auf die Anordnung des Zahnkranzes eine Rolle.

Neben normal verzahnten Zahnriemen und Zahnkränzen könnte auch eine Vielkeilverzahnung realisiert werden. Hierdurch wird unerwünschtes Gleiten und damit Verschleiß, Erwärmung und Geräuschentwicklung weiter herabgesetzt. Zur Aufnahme hoher Zugkräfte könnten in dem in der Regel aus Kunststoff bestehenden Zahnriemen Kevlarfäden eingelagert sein. Die Konfektionierung des Fördergurtes mit dem Zahnriemen könnte durch Aufschweißen oder Aufvulkanisieren oder Aufkleben erfolgen.

Der Zahnriemen ist Bestandteil eines in Querrichtung des Zahnriemens im wesentlichen U-förmig ausgebildeten Zahnriemenbauteils. Durch die U-Form ist es möglich, das Zahnriemenbauteil einfach auf den Rand des Fördergurtes aufzustecken bis der Randbereich auf das Basisteil zwischen den U-Schenkeln aufgetroffen ist. Vorher kann die Innenoberfläche des Zahnriemenbauteils mit Klebstoff versehen worden sein. Als Folge seiner Formgebung und dieser Konfektionierung umgreift das Zahnriemenbauteil den Seitenrandbereich des Fördergurtes.

Während der Zahnriemen des Fördergurtes durch den Zahnkranz mit Druckkraft beaufschlagt wird und so ein Ablösen des Zahnriemenbauteil an der Unterseite des Fördergurtes weitgehend ausgeschlossen ist, ist zur Sicherung des sich an der Oberseite des Fördergurtes erstreckenden Bereichs des Zahnriemenbauteils eine Gegendruckeinrichtung vorgesehen. Konstruktiv könnte die Gegendruckeinrichtung in Form eines Armes vorliegen, der auf den U-Schenkel des Zahnriemenbauteils an der Oberseite einwirkt und diesen somit beständig an die Oberseite des Fördergurtes andrückt.

Im Hinblick auf eine sichere Führung bildet das den Zahnriemen beinhaltende Zahnriemenbauteil eine Wulst aus. Über die Länge des Fördergurtes entsteht somit eine Wulstleiste. Bei dem U-förmigen Zahnriemenbauteil erstreckt sich die Wulstleiste jeweils an den freien Enden der U-Schenkel, beabstandet zum Rand des Fördergurtes, wobei sich der Abstand im wesentlichen nach der Breite des Zahnriemens richtet. Die an dem speziellen Zahnriemenbauteil getroffene Führungsmaßnahme ist dafür vorgesehen, daß ein Führungsrollenpaar an der Wulstleiste angreift. Die voranstehend erläuterte Führungsmaßnahme könnte bei Gurtkurven und Gurtgeraden sowie unterschiedliche Höhen überbrückende Gurt-S-Formen gleichermaßen getroffen werden.

Bei Gurtkurven ist die auf den Fördergurt einwirkende Kraft zum Innenradius der Gurtkurve gerichtet, so daß die Führungsrollen in vorteilhafter, für sich bekannter Weise geneigte Laufflächen aufweisen könnten. Entsprechend abgewinkelte Haltearme als Bestandteil von Haltekonstruktionen für die Führungsrollen könnten jeweils im Bereich einer Tragrolle angeordnet sein. Die Führungsrollen könnten paarweise am Obertrum und am Untertrum des Fördergurtes angeordnet sein.

Es sei an dieser Stelle hervorgehoben, daß mit dem erfindungsgemäßen Gurtbandförderer mit der Wulst eine Zusammenführung zweier Funktionen durch das formschlüssig arbeitende Elementenpaar realisiert wird. Nicht nur die Kraftübertragung findet statt, sondern auch die Führung des Fördergurtes. In vorteilhafter Weise wird die Formstabilität des Fördergurtes durch das formschlüssig arbeitende Elementenpaar mit der speziellen Ausgestaltung des Zahnriemenbauteils zum Angriff der Führungsrollen erhöht.

Bei der bereits angeführten Ausbildung des Gurtbandförderers in Form einer Gurtkurve sind die Tragrollen kegelförmig ausgebildet und der Zahnkranz ist am durchmessergrößeren Ende der jeweiligen Tragrolle, also am Außenradius der Gurtkurve, angeordnet. Die Antriebseinrichtung liegt als Motor vor und ist der ersten Tragrolle der Gurtkurve zugeordnet. Das formschlüssige Ineinandergreifen von Zahnrad und Zahnriemen erfolgt im Bereich jeder Tragrolle, wobei der Formschluß in Bezug auf die erste, motorisch angetriebene Tragrolle der Kraftübertragung und in Bezug auf die übrigen Rollen der Führung des Fördergurtes dient.

Ein weiterer Vorteil der bevorzugten Ausführungsform des erfindungsgemäßen Gurtbandförderers, wobei Zahnkranz und Zahnriemen zusammenwirken, besteht in der verbesserten Steuerbarkeit der Gurtgeschwindigkeit entsprechend der aktuellen Belastung. Es könnte eine Steuereinrichtung vorgesehen sein, die eine Veränderung der Geschwindigkeit durch entsprechende Meßaufnehmer erfaßt und die Leistung der Antriebseinrichtung im Rahmen der Sicherheitsbestimmungen nachreguliert.

Gegenüber der per Reibschluß realisierten Kraftübertragung besteht bei dem erfindungsgemäßen Gurtbandförderer nicht nur der Vorteil der besseren Steuerbarkeit, sondern auch der Vorteil, daß der Fördergurt durch die Führung mittels des formschlüssig wirkenden Elementenpaares und mittels der Führungsrollenpaare eine hohe Formstabilität aufweist und mit höheren Drehmomenten beaufschlagt werden kann. Insgesamt kann eine erhöhte Antriebsleistung beim Anfahren erzielt werden. Nach einer Bauausführung des erfindungsgemäßen Gurtbandförderers in Form einer Gurtkurve mit einem Innenradius von 400 mm liegt die Drehzahl der Tragrollen bei einer Maximalgeschwindigkeit von 1,5 m/sec bei 230 U/min.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung werden auch im allgemeinen bevorzugte Ausgestaltungen und Weiterbildungen der Lehre erläutert. In der Zeichnung zeigen
- Fig. 1: in quergeschnittener Darstellung, ein Ausführungsbeispiel des erfindungsgemäßen Gurtbandförderers, betreffend die Kraftübertragung auf den Fördergurt und dessen Führung,
- Fig. 2: in schematischer Darstellung, vergößert, ein Querschnittsprofil des auf der Tragrolle befestigten Zahnkranzes aus Fig. 1,
- Fig. 3: in schematischer Darstellung, ein Querschnittsprofil des den Fördergurt umgreifenden Zahnriemenbauteils aus Fig. 1 und
- Fig. 4: in schematischer Darstellung, vereinfacht, einen Ausschnitt aus einer Aufsicht auf eine angedeutete Gurtkurve unter Weglassung des Obertrums des Fördergurtes und mit zwei verschiedenen Tragrollenvarianten, wobei eine Tragrollenvariante der aus Fig. 1 entspricht.

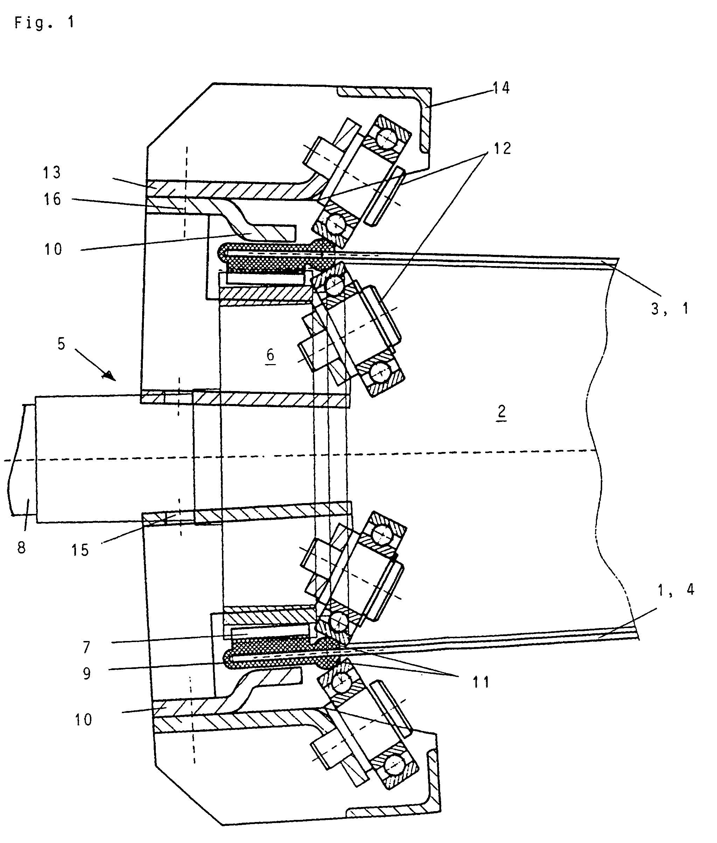

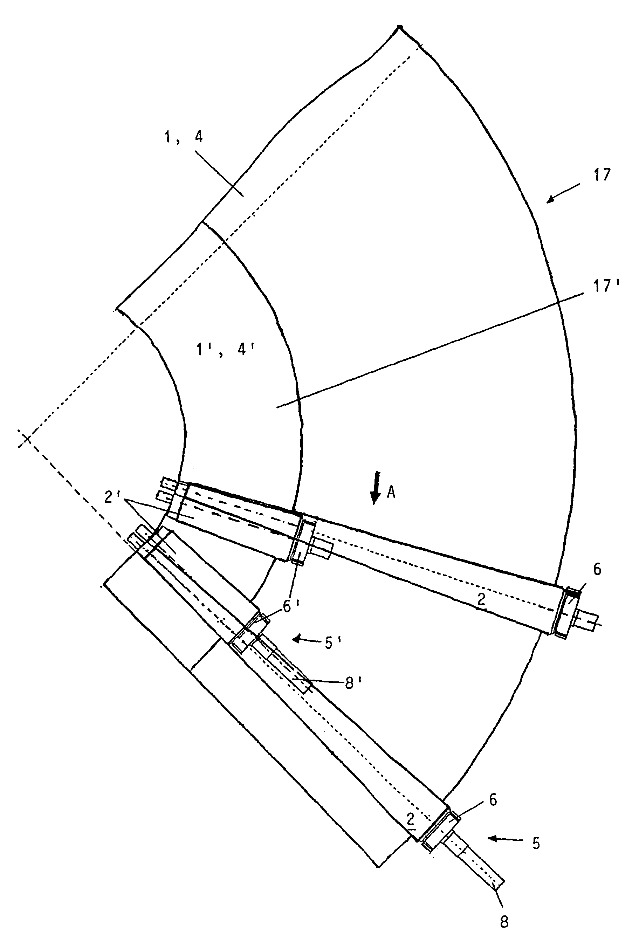

Fig. 1 zeigt ein bevorzugtes Ausführungsbeispiel des erfindungsgemäßen Gurtbandförderers. Der Gurtbandförderer weist einen um hier nicht dargestelle Umlenkrollen umlaufenden Fördergurt 1 auf. Wie in Fig. 4 angedeutet, sind mehrere Tragrollen 2 oder 2' vorgesehen. Gemäß Fig. 1 sind die Tragrollen 2 zwischen dem Obertrum 3 und dem Untertrum 4 des Fördergurtes 1 angeordnet. Des weiteren ist eine hier nicht dargestellte Antriebseinrichtung in Form eines Motors und eine Kraftübertragungseinrichtung 5 zur Bewegung des Fördergurtes 1 vorgesehen.

Erfindungsgemäß ist zur Kraftübertragung ein formschlüssig miteinander arbeitendes Elementenpaar 6, 7 vorgesehen, wobei hier ein Element 6 in Form eines Zahnkranzes 6 der Kraftübertragungseinrichtung 5 und das andere Element 7 in Form eines Zahnriemens 7 dem Fördergurt 1 zugeordnet ist.

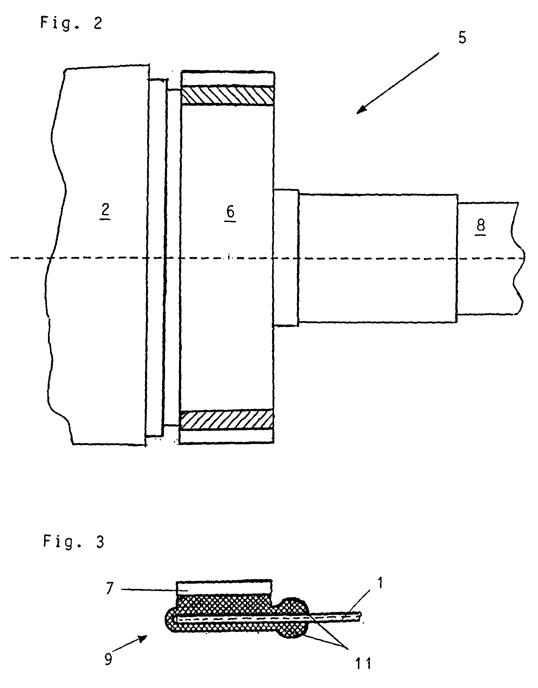

Der in Fig. 2 gezeigte Zahnkranz 6 ist jeder Tragrolle 2 zugeordnet. Bei dem hier gezeigten Ausführungsbeispiel mit kegelförmigen Tragrollen 2 ist je ein Zahnkranz 6 am durchmessergrößeren Ende der jeweiligen Tragrolle 2 angeordnet. Die in Fig. 2 gezeigte Tragrolle 2 weist als einzige Tragrolle 2 einen Zapfen 8 auf, der mit der Antriebseinrichtung verbindbar ist.

Der in Fig. 3 dargestellte Zahnriemen 7 ist am Fördergurt 1 fixiert. Die nicht näher bezeichneten Zähne des Zahnkranzes 6 und des Zahnriemens 7 können bspw. die Standartgröße 8M aufweisen.

Aus Fig. 1 geht hervor, daß der Zahnriemen 7 an der Unterseite und am Seitenrand des Fördergurtes 1 in der in Fig. 4 mit einem Pfeil A gekennzeichneten Laufrichtung angeordnet ist und ebenso wie der Zahnkranz 6 eine Normalverzahnung aufweist.

Die besondere Ausgestaltung des Zahnriemens 7 gemäß dem hier erläuterten Ausführungsbeispiel besteht darin, daß dieser Bestandteil eines in den Fig. 1 und 3 gezeigten und in Querrichtung des Zahnriemens 7 im wesentlichen U-förmig ausgebildeten Zahnriemenbauteils 9 ist, das den Seitenrandbereich des Fördergurtes 1 umgreift. Der sich an der Oberseite des Fördergurtes 1 erstreckende Bereich des Zahnriemenbauteils 9 wird mittels einer an Ober- und Untertrum 3, 4 wirkenden Gegendruckeinrichtung 10 an den Fördergurt 1 angedrückt.

Die freien Enden des im wesentlichen U-förmig ausgebildeten Zahnriemenbauteils 9 sind als Wulst 11 ausgebildet, welche entlang des Fördergurtrandes eine Wulstleiste ergibt. An die Wulst 11 greifen Führungsrollen 12 an, welche paarweise am Ober- und Untertrum 3, 4 angeordnet und dem durchmessergrößeren Ende jeder der kegelförmigen Tragrollen 2 zugeordnet sind.

Die Führungsrollen 12 sind an abgewinkelten Haltearmen 13 einer Haltekonstruktion 14 derart befestigt, daß sie mit geneigten Laufflächen am Zahnriemenbauteil 9 bzw. an der Wulst 11 angreifen. Mit der Bezugsziffer 15 sind Bohrungen der Haltekonstruktion 14 bezeichnet, die der externen Befestigung am Gurttisch dienen. Die Anordnung und Festlegung der Gegendruckeinrichtung 10 erfolgt durch eine Verbindung zum Haltearm 13, weiche durch die mit der Bezugsziffer 16 versehenen gestrichelten Bohrlinie angedeutet ist.

Aus Fig. 4 ergeben sich zwei unterschiedliche Bauformen der Tragrollen 2, 2', wobei sich diese hinsichtlich der Baulänge und dem Durchmesser unterscheiden. Besonders deutlich ist erkennbar, daß die Tragrollen 2, 2' kegelförmig sind und eine Gurtkurve 17, 17' ausbilden. Bei der Aufsicht ist das Obertrum des jeweiligen Fördergurtes 1, 1' weggelassen und nur die Sicht auf das jeweilige Untertrum 4, 4' dargestellt.

Aus Fig. 4 geht weiter hervor, daß jeweils nur die erste Tragrolle 2, 2' mit einem Zapfen 8, 8' für die Antriebseinrichtung vorgesehen ist und dort die Kraftübertragung und Bewegungsumformung über den Zahnkranz 6, 6' und den dort nicht dargestellten jeweiligen Zahnriemen erfolgt. Jede weitere Tragrolle 2, 2' ist ebenfalls mit einem Zahnkranz 6, 6' versehen, der dann eine Führungsfunktion ausübt.

Hinsichtlich weiterer, in den Figuren nicht gezeigter Merkmale wird auf den allgemeinen Teil der Beschreibung verwiesen.

Abschließend sei darauf hingewiesen, daß die erfindungsgemäße Lehre nicht auf das voranstehend erörterte Ausführungsbeispiel eingeschränkt ist. Vielmehr sind die unterschiedlichsten Steuer- und Antriebskonzepte möglich.

### Bezugszeichenliste

- 1, 1': Fördergurt
- 2, 2': Tragrollen
- 3: Obertrum von 1
- 4, 4': Untertrum von 1
- 5, 5': Kraftübertragungseinrichtung
- 6, 6': Element, Zahnkranz
- 7: Element, Zahnriemen
- 8, 8': Zapfen von 2, 2'
- 9: Zahnriemenbauteil
- 10: Gegendruckeinrichtung
- 11: Wulst von 9
- 12: Führungsrollen
- 13: Haltearm
- 14: Haltekonstruktion
- 15: Bohrung in 14
- 16: Verbindung zwischen 10 und 13
- 17, 17': Gurtkurve

- A: Laufrichtung von 1, 1'

## Patentansprüche

1. Gurtförderer für eine Gurtkurve mit einem endlosen Fördergurt (1, 1') mit Obertrum (3) und Untertrum (4, 4') sowie mit einer oberen und einer unteren Wulst (11), gegen die schräg stehende Führungsrollen (12) anliegen, wobei der Gurt im Randbereich einen Zahnriemen (7) aufweist, wobei der Gurtförderer mehrere winklig zueinander liegende zwischen dem Obertrum und dem Untertrum des Fördergurtes angeordnete Tragrollen (2) aufweist, von denen an zumindest einer mit einer Antriebseinrichtung wirkverbundenen Tragrolle ein Zahnkranz (6) angeordnet ist, der mit dem Zahnriemen kämmt, der Zahnriemen (7) Bestandteil eines in Querrichtung des Zahnriemens (7) U-förmig ausgebildeten Zahnriemenbauteils (9) ist, das den Seitenrandbereich des Fördergurtes (1) umgreift und die freien Enden des U-förmig ausgebildeten Zahnriemenbauteils (9) als die obere bzw. die untere Wulst (11) ausgebildet sind.

2. Gurtförderer nach Anspruch 1, wobei von dem Ende der ersten Tragrolle (2, 2') ein Zapfen (8, 8') zum Anschluß der Antriebseinrichtung abragt.

3. Gurtförderer nach einem der Ansprüche 1 oder 2, wobei im Zahnriemen (7) Kevlarfäden eingelagert sind.

4. Gurtförderer nach einem der Ansprüche 1 bis 3, wobei der Zahnriemen (7) auf den Fördergurt (1) aufgeschweißt-oder aufvulkanisiert oder aufgeklebt ist.

5. Gurtförderer nach Anspruch 1 bis 4, wobei eine Gegendruckeinrichtung (10) vorliegt, welche an dem sich an der Oberseite des Fördergurtes (1) erstreckenden Bereich des Zahnriemenbauteils (9) angreift.

## Claims

1. Conveying belt for a belt curve with an endless conveyer belt (1,1') with carrying strand (3)and a bottom strand (4,4'), as well as with an upper and a lower bead (11) against which obliquely standing guide rollers (12) lie, whereby the conveying belt has several carrying rollers (2) lying at an angle to one another arranged between the carrying strand and the bottom strand of the conveyer belt of which on at least one carrying roller workingly connected with a driving device is arranged a toothed ring which engaged with the toothed belt, the toothed belt (7) is part of a toothed belt constructional part (9) formed U-shaped in the transverse direction of the toothed belt, which encompasses the side edge region of the conveyer belt (1) and the free ends of the U-shaped formed toothed belt constructional part (9) are formed as the upper or the lower bead (11).

2. Conveying belt according to claim 1, whereby, from the end of the first carrying roll (2, 2'), a journal (8,8') projects for the connection of the drive device.

3. Conveying belt according to claims 1 or 2, whereby Kevlar filaments are incorporated in the toothed belt (7).

4. Conveying belt according to claim 1 to 3, whereby- the toothed belt is welded on or vulcanised on or stuck on to the conveyer belt (1).

5. Conveyingbelt according to claim 1 to 4, whereby a counterpressure device (10) is present which engages on the region of the toothed belt constructional part (9) extending on the upper side of the conveyer belt (1).

## Revendications

1. Transporteur à courroie pour une courbe à courroie avec une courroie d'acheminement sans fin (1, 1') avec brin supérieur (3) et brin inférieur (4, 4') ainsi qu'avec un renflement (11) supérieur et inférieur, auquel sont adjacents les rouleaux de guidage (12) se trouvant à l'oblique, la courroie présentant dans une zone marginale une courroie dentée (7), le transporteur à courroie présentant plusieurs rouleaux porteurs (2) disposés entre le brin supérieur et le brin inférieur de la courroie d'acheminement, situés angulairement l'un par rapport à l'autre, dont sur au moins un rouleau porteur relié activement à un dispositif de commande, une couronne dentée (6) est disposée, qui engrène avec la courroie dentée, la courroie dentée (7) étant une partie constitutive d'un élément de courroie dentée (9) conçu en forme de U dans le sens transversal de la courroie dentée (7), ledit élément enveloppant la zone marginale latérale de la courroie d'acheminement (1) et les extrémités fibres de la partie constitutive d'un élément de courroie dentée (9) conçue en forme de U sont conçues comme renflement supérieur resp. inférieur (11).

2. Transporteur à courroie selon la revendication 1, dans lequel un tourillon (8,8') dépasse de l'extrémité du premier rouleau porteur (2, 2') pour raccordement du dispositif d'entraînement.

3. Transporteur à courroie selon l'une des revendications 1 ou 2, dans lequel sont stockés des fils Kevlar dans une courroie dentée (7).

4. Transporteur à courroie selon l'une des revendications 1 à 3, dans lequel la courroie dentée (7) est soudée ou vulcanisée ou collée sur la courroie d'acheminement (1).

5. Transporteur à courroie selon la revendication 1 à 4, dans lequel un dispositif de contre-pression (10) est présent, lequel est appliqué sur la zone de l'élément de courroie dentée (9) s'étendant sur le côté supérieur de la courroie d'acheminement (1).
